# EUROPÄISCHE PATENTSCHRIFT

(11) **EP 0 607 188 B1**
(45) Veröffentlichungstag und Bekanntmachung des Hinweises auf die Patenterteilung: **02.04.1997**
(21) Anmeldenummer: 92919943.8
(22) Anmeldetag: 21.09.1992
(51) Int. Cl.: B60T 8/50

(54) **BLOCKIERGESCHÜTZTE, HYDRAULISCHE BREMSANLAGE**
ANTI-BLOCKING HYDRAULIC BRAKE SYSTEM
SYSTEME DE FREINAGE HYDRAULIQUE ANTIBLOCAGE

(30) Priorität: 18.10.1991 DE 4134427
(43) Veröffentlichungstag der Anmeldung: 27.07.1994
(73) Patentinhaber: ITT Automotive Europe GmbH, 60488 Frankfurt am Main (DE)
(72) Erfinder: ZAVISKA, Dalibor, D-6000 Frankfurt am Main 80 (DE); LINHOFF, Paul, D-6233 Kelkheim-Eppenhain (DE)
(86) Internationale Anmeldenummer: EP9202177
(87) Internationale Veröffentlichungsnummer: WO9308056

(56) Entgegenhaltungen:
- EP-A- 0 232 783
- EP-A- 0 242 132
- EP-A- 0 267 162
- EP-A- 0 363 845
- EP-A- 0 401 856
- US-A- 3 856 047
- US-A- 3 973 806
- US-A- 3 977 649

## Beschreibung

Die Erfindung bezieht sich auf eine blockiergeschützte hydraulische Bremsanlage gemäß dem Oberbegriff des Anspruch 1.

Eine derartige Bremsanlage ist aus der EP A-401 856 bekannt. Das Stromregelventil befindet sich vollständig in der Bremsleitung, d.h. die Radbremse schließt in der Regelphase unmittelbar an das Auslaßventil an. Dies hat zum Beispiel bei einem Druckabbau die Folge, daß sowohl die Druckmittelmenge, die über das Stromregelventil fließt, als auch die von den Radzylindern abfließende Druckmittelmenge über das Auslaßventil geleitet werden muß. Das Auslaßventil muß daher für hohe Druckmittelströme ausgelegt sein. Da große Querschnitte zu öffnen sind, ergeben sich negative Einflüsse auf die Regelgüte.

Die Erfindung beruht daher auf der Aufgabe, bei einer Bremsanlage gemäß der genannten Gattung die Regelgüte auf einfache zu erhöhen.

Die Aufgabe wird dadurch gelöst, daß der Radbremsanschluß unabhängig von der Lage des Kolbens ständig mit der Nut in Verbindung steht, wobei die eine Drossel in die Rücklaufleitung und die andere Drossel in die Bremsleitung eingefügt ist.

Im Stand der Technik regelt das Stromregelventil somit die Druckmittelmenge auf einen festen Wert ein, die von der Pumpe bzw. dem Hauptzylinder herrührt. Dies bedeutet, daß der Radzylinderanschluß stets unterhalb der beiden Drosseln, die das Stromregelventil bilden, anschließt. Durch die vorgeschlagene Änderung wird erreicht, daß sowohl die Druckmittelmenge, die von der Pumpe bzw. dem Hauptzylinder herrührt als auch die Druckmittelmenge, die der Radbremse zugeführt oder entnommen wird, in Addition zueinander auf einen festen Wert eingeregelt werden.

Damit paßt sich die zufließende Druckmittelmenge besser an den jeweiligen Regelzyklus an.

Eine einfache Ausführung eines Stromregelventils erhält man, indem man einen Kolben vorsieht, der mit seiner einen Seite eine Einlaßkammer und mit seiner anderen Seite eine Auslaßkammer begrenzt. Eine Längsbohrung durch den Kolben verbindet beide Kammern, wobei die Längsbohrung mit einer Meßblende versehen ist.

Die Radbremse schließt nun über eine Querbohrung und einer Nut an der Außenseite des Kolbens an den Bereich der Längsbohrung an, die zwischen der Meßblende und der Einlaßkammer liegt.

Es hat sich weiterhin als günstig herausgestellt, wenn die Meßblende durch zwei Blenden dargestellt wird, wobei die Radbremse an den Kanalbereich zwischen der ersten und der zweiten Blende anschließt.

Es hat sich als vorteilhaft herausgestellt, daß als Auslaßventil ein Proportionaldruckbegrenzungsventil verwandt wird.

Im folgenden wird anhand mehrerer Ausführungsbeispiele die Idee erläutert, wobei zum Teil weitere Ideen beschrieben werden, die in Kombination mit der beanspruchten Erfindung eingesetzt werden können.

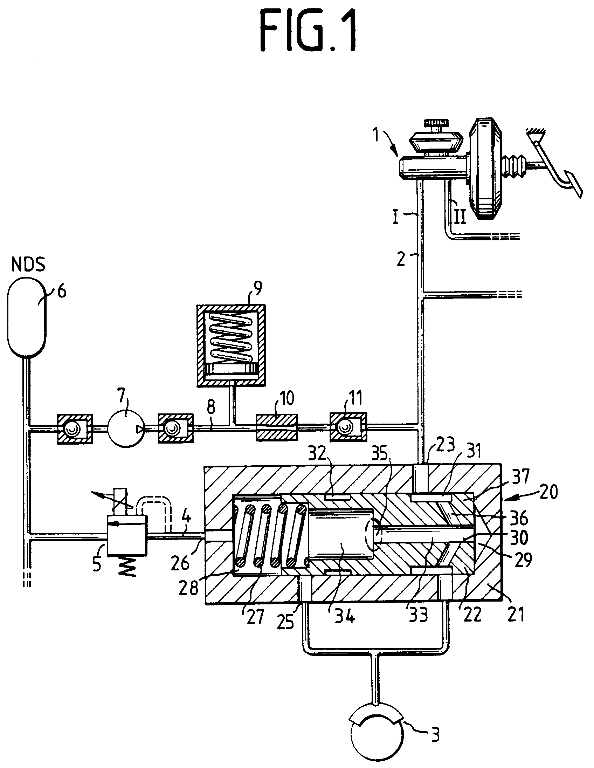

Die in Figur 1 dargestellte Bremsanlage entspricht nicht der beanspruchten Erfindung. Diese Bremsanlage besteht aus einem Hauptzylinder 1, an den zwei Bremskreise I, II angeschlossen sind. Der Hauptzylinder 1 ist von üblicher Bauart und braucht daher nicht näher erläutert zu werden. Die Aufteilung der Radbremsen auf die Bremskreise I, II ist beliebig bzw. entspricht einer der gebräuchlichen Varianten. Daher ist im folgenden nur ein Bremskreis dargestellt, wobei der zweite Bremskreis entsprechend aufgebaut ist. Eine Radbremse 3 ist über eine Bremsleitung 2 an den Hauptzylinder 1 angeschlossen. Sie steht weiterhin über eine Rücklaufleitung 4, in die ein Proportionaldruckbegrenzungsventil 5 eingefügt ist, mit einem Niederdruckspeicher 6 in Verbindung. Eine Pumpe 7 fördert aus dem Niederdruckspeicher 6 über eine Druckleitung 8 in die Bremsleitung 2 unmittelbar unterhalb des Hauptzylinders. Um Druckstöße in der Druckleitung 8 zu verhindern, ist ein Hochdruckspeicher als Dämpfungsspeicher 9 sowie eine Drossel 10 vorgesehen. Ein Rückschlagventil 11 verhindert das Befüllen des Dämpfungsspeichers 9 bei einer Normalbremsung. Die Bremsleitung 2 verfügt über ein Stromregelventil 20, das im folgenden näher erläutert werden soll.

In einem Gehäuse 21 mit einer zweiseitig abgeschlossenen Längsbohrung ist ein Kolben 22 dichtend geführt. Das Gehäuse weist vier Anschlüsse 23, 24 25, 26 auf. Der erste Anschluß 23 ist mit dem Hauptzylinder 1, der zweite und dritte Anschluß 24, 25 sind mit der Radbremse 3 verbunden, der vierte Anschluß 26 führt zum Proportionaldruckbegrenzungsventil 5. Eine Feder 27, die einerseits am Gehäuse 21 und andererseits an einer Stirnfläche des Kolbens 22 abgestützt ist, hält den Kolben in einer Grundstellung. Der Kolben 22 unterteilt die Gehäusebohrung in zwei Kammern, nämlich in eine Auslaßkammer 28 und in eine Einlaßkammer 29. In der Grundstellung des Kolbens 22 weist die Einlaßkammer 29 ihr kleinstes und die Auslaßkammer 28 ihr größtes Volumen auf. Die beiden Kammern 28, 29 sind mittels einer Längsbohrung 30 durch die Achse des Kolbens 22 miteinander verbunden. Der Kolben weist an seiner Mantelfläche zwei Ringnuten 31, 32 auf, die im folgenden als Einlaßringnut 31 und als Auslaßringnut 32 bezeichnet werden. Die schon erwähnte Längsbohrung 30 besteht aus zwei Bohrungsabschnitten 33, 34, wobei der erste Bohrungsabschnitt 33 einen kleineren Durchmesser und der zweite Bohrungsabschnitt 34 einen größeren Durchmesser aufweist. Der erste Bohrungsabschnitt mündet in die Einlaßkammer 29, während der zweite Bohrungsabschnitt in die Auslaßkammer 28 übergeht. Der Übergang zwischen dem ersten Bohrungsabschnitt 33 und dem zweiten Bohrungsabschnitt 34 erfolgt stufenartig. Dies bedeutet, daß die Ringfläche im Übergangsbereich 35 senkrecht zur Längsachse der Bohrung 30 steht. Durchströmt ein Druckmittel die Bohrung 30 von der Einlaßkammer 29 zur Auslaßkammer 28, so erfolgt im stufenartigen Übergangsbereich 35 eine Verwirbelung, die in Abhängigkeit von der Strömungsgeschwindigkeit zu einem definierten Druckgefälle zwischen der Einlaßkammer 29 und der Auslaßkammer 28 führt. Der Übergang 35 wirkt damit als Meßblende für das Stromregelventil 20.

Die Einlaßnut 31 steht über eine oder mehrere Querbohrungen 36 mit dem ersten Bohrungsabschnitt 33 kleineren Durchmessers in Verbindung. Die Querbohrungen 36 können senkrecht zur Achse des Kolbens ausgerichtet sein oder, wie in der Figur 1 dargestellt, eine leichte Neigung gegenüber der Achse aufweisen.

Die Einlaßnut 31 ist nun so angeordnet, daß in der Grundstellung des Kolbens 22 sowohl der erste Anschluß 23 als auch der zweite Anschluß 24 mit ihrem vollen Querschnitt in die Einlaßnut 31 einmünden. Von daher besteht eine direkte Verbindung zwischen dem Hauptzylinder 1 und der Radbremse 3 ohne daß eine Querschnittsverengung vorliegt.

Die Auslaßnut 32, die über eine Querbohrung mit dem Bohrungsabschnitt 34 größeren Querschnitts verbunden ist, weist in der Grundstellung des Kolbens 22 keine Verbindung zu einem der Anschlüsse auf. Wird nun der Kolben 22 wegen eines Druckgefälles zwischen der Einlaßkammer 29 und der Auslaßkammer 28 gegen die Kraft der Feder 27 verschoben, so gelangt die Steuerkante 37, die an die Einlaßnut 31 anschließt, in vollständige Überdeckung zum zweiten Auslaß 24, so daß dieser gesperrt ist. Da der erste Anschluß 23 gegenüber dem zweiten Anschluß 24 versetzt ist, ist der erste Anschluß 23 bei Sperrung des zweiten Anschlusses 24 noch zum Teil geöffnet. Mit Sperren des zweiten Anschlusses 24 gelangt die Auslaßnut 32 in den Überdeckungsbereich des dritten Anschlusses 25, so daß nun eine Verbindung zwischen der Radbremse 3 und dem vierten Auslaß 26 zum Proportionaldruckbegrenzungsventil 5 existiert. Die Verbindung zwischen dem ersten Anschluß 23 und der Einlaßnut 31 wird nun in Abhängigkeit von der Stellung des Kolbens 22 mehr oder weniger stark zusammengeschnürt. Damit ergibt sich die Funktion eines Differenzdruckreglers. Die Stellung des Kolbens 22 bestimmt sich wiederum aus dem Druckgefälle zwischen den Kammern 28 und 29, das sich auf Grund eines Druckabfalls des strömenden Mediums am Übergangsbereich 35 einstellt. Meßblende und Differenzdruckgeber ergeben zusammen die Funktion eines Stromregelventils, so daß sich unabhängig vom Druckgefälle stets ein gleichbleibender Druckmittelstrom einstellt.

Ein weiteres wichtiges Element der Bremsanlage ist das Auslaß- bzw. Proportionaldruckbegrenzungsventil 5.

Es tritt an die Stelle eines elektromagnetisch betätigten 2/2-Wegeventils, das zwei Schaltstellungen kennt, nämlich die offene und die geschlossene Stellung. Die Ansteuerung des Betätigungsmagneten eines derartigen Wegeventils erfolgt über ein pulsbreitenmoduliertes Signal, wobei das Verhältnis von Öffnungs- zu Schließzeiten verändert wird. Das Verhältnis bestimmt die Durchflußmenge pro Zeiteinheit. Im Gegensatz dazu ist bei einem Proportionaldruckbegrenzungsventil ein federbelasteter Schließkörper vorgesehen, der dem Druck an der Eingangsseite des Ventils, in vorliegendem Fall ist dies der Druck am vierten Anschluß 26, ausgesetzt ist. Wenn der Druck in der Lage ist, die Federkraft zu überwinden, öffnet das Ventil und läßt Druckmittel abfließen, bis der Druck am Einlaß unter den eingestellten Öffnungsdruck sinkt. Wird der Schließkörper nun gleichzeitig einer Magnetkraft ausgesetzt, die der Federkraft entgegenwirkt, so kann durch Änderung der Magnetkraft jeder beliebige Öffnungsdruck eingestellt werden.

Magnete, die eine Magnetkraft proportional zum elektrischen Strom einstellen, nennt man Proportionalmagnete.

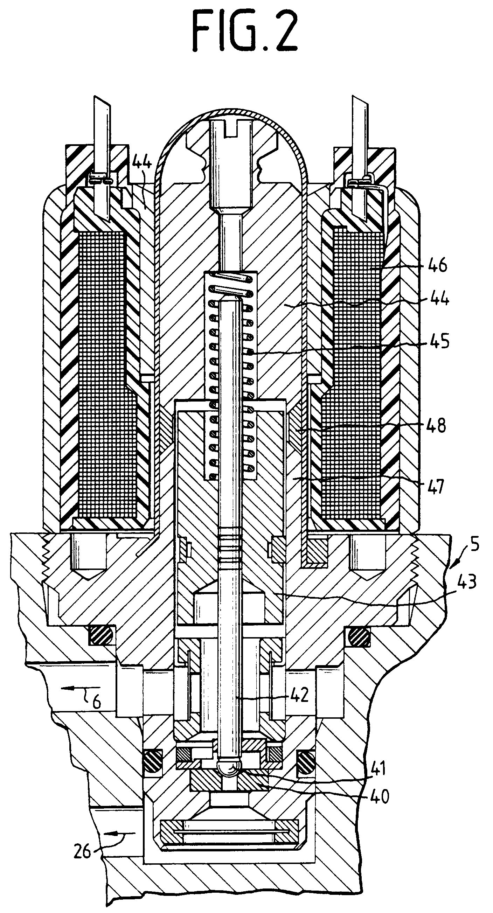

Die Ausführung eines Proportionaldruckbegrenzungsventils ist in der Figur 2 dargestellt. Im unteren Teil erkennt man einen Ventilsitz 40, wobei ein Raum unterhalb des Ventilsitzes 40 zum vierten Anschluß 26 und damit zur Radbremse führt und ein Raum oberhalb des Ventilsitzes mit dem Niederdruckspeicher 6 verbunden ist. Auf dem Ventilsitz liegt ein kalottenförmiger Ventilkörper 41, der mit einem Stößel 42 verbunden ist. Der Stößel 42 ist zentral durch einen kolbenförmigen Anker 43 hindurchgeführt und mit diesem verbunden. Oberhalb des Ankers 43 ist ein Polkern 44 mit einer Ausnehmung angeordnet, in die der Anker 43 eintaucht. Zwischen dem Anker 43 und dem Polkern 44 liegt ein axialer Abstand vor; zwischen dem Anker 43 und dem Rand der Ausnehmung ein radialer Abstand. Weiterhin ist eine Feder 45 vorgesehen, die einerseits am Polkern und andererseits am Anker abgestützt ist.

Der Anker ist von einer Führungshülse 47 umgeben, wobei ein radialer Spalt zwischen dem Anker 43 und der Führungshülse 47 vorgesehen ist. Ein Spalt 48 besteht auch zwischen dem Polkern 44 und der Führungshülse 47. Eine Spule 46 umgibt den Polkern 44 und den Anker 43 und die Führungshülse 47.

Die Feder 45 hält nun den Ventilkörper 41 auf dem Ventilsitz 40, so daß die Verbindung zwischen dem Anschluß 26 und dem Niederdruckspeicher 6 unterbrochen ist. Die Federkraft ist so eingestellt, daß der maximal erzielbare Bremsdruck nicht in der Lage ist, den Ventilkörper 41 vom Ventilsitz 40 abzuheben.

Wird nun die Spule an ein Stromerzeugungssystem angeschlossen, so bewirkt der durch die Spule 46 fließende Strom einen Magnetfluß durch den Anker 43. Die dabei erzeugte Magnetkraft zieht den Anker 43 in das Spulensystem hinein, wobei durch die richtige Abstimmung von Axialluftspalt zu Radialluftspalt eine vom Hub unabhängige Kraft eingestellt werden kann. Die auf den Anker 43 wirkende Kraft hängt dann nur noch von der Stromstärke ab, mit der die Spule 46 beaufschlagt wird. Die Technik der Proportionalmagnete ist wohl bekannt und braucht an dieser Stelle nicht weiter erläutert zu werden. Zur Versorgung der Spule 46 mit einem konstanten Strom kann ein Spannungs-Strom-Wandler vorgesehen werden, der als Leistungsverstärker dient und dem Magneten einen zur Eingangsspannung proportionalen Strom einprägt. Denkbar ist auch eine Schaltung, die auf Grund von pulsbreitenmodulierten Spannungssignalen einen konstanten Strom erzeugt.

Die in der Figur 1 und 2 beschriebene Bremsanlage arbeitet wie folgt:

Eine Bremsung wird durch Niedertreten des symbolisch angedeuteten Pedals eingeleitet. Druckmittel fließt vom Hauptzylinder 1 über den Anschluß 23 die Einlaßnut 31 und dem zweiten Anschluß 24 zur Radbremse 3. Damit wird im Bremskreis ein Druck aufgebaut, der zu einer Radverzögerung und letztlich zu einer Fahrzeugverzögerung führt.

Das Drehverhalten des Rades wird während einer Bremsung durch nicht dargestellte Sensoren überwacht. Erkennt die angeschlossene Auswerteelektronik, daß die Gefahr besteht, daß das Rad blockiert, so erzeugt sie ein Strom- bzw. Spannungssignal für das Proportionaldruckbegrenzungsventil 5 und setzt die Pumpe 7 in Betrieb.

Der Öffnungsdruck des Ventils 5 wird herabgesetzt und liegt nun unterhalb des momentanen Bremsdrucks.

Das aus der Auslaßkammer 28 abfließende Druckmittel läßt Druckmittel aus der Einlaßkammer 29 bzw. von der Radbremse 3 nachfließen. Das sich am Übergangsbereich 35 einstellende Druckgefälle bewirkt eine Verschiebung des Kolbens 22, so daß, wie schon erläutert, der zweite Anschluß 24 gesperrt und der dritte Anschluß 25 geöffnet wird. Die Radbremse 3 steht nunmehr mit dem Bohrungsbereich 34 stromabwärts des Übergangsbereichs 35 in Verbindung. Der Anschluß 23 wird durch die Steuerkante 37 soweit abgedrosselt, daß sich im Zusammenspiel mit dem Druckgefälle am Übergangsbereich 35 ein konstanter Druckmittelstrom vom Anschluß 23 zum Anschluß 25 bzw. 26 einstellt.

Mit dem Proportionaldruckbegrenzungsventil 5 kann nun ein Druck in der Radbremse 3 eingestellt werden, der proportional ist zur Stärke des Stroms durch die Magnetspule 46. Diese wird nun so eingestellt, daß das Rad einen Schlupf aufweist, der es ermöglicht, sowohl maximale Längskräfte als auch Seitenführungskräfte am Rad zu übertragen. Das über das Proportionaldruckbegrenzungsventil 5 abfließende Druckmittel wird vom Niederdruckspeicher 6 aufgenommen und von der Pumpe 7 zurück in den Bremskreis geleitet.

Da das Signal für das Proportionaldruckbegrenzungsventil 5 proportional zum Druck in der Radbremse ist, läßt sich in der Auswerteeinheit eine Lernschaltung installieren, die zu einer Verbesserung der Regelgüte führt. Die Geschwindigkeit des Druckab- bzw. -aufbaues läßt sich nun durch eine entsprechend langsame bzw. schnelle Spulenstromänderung hervorrufen, so daß beliebige Druckabbau- bzw. -aufbaugradienten eingestellt werden können.

Die Verwendung eines Proportionaldruckbegrenzungsventils 5 läßt sich auf jede Art von blockiergeschützten Bremsanlagen übertragen. Im Zusammenspiel mit einem Stromregelventil ergeben sich aber besondere Vorteile.

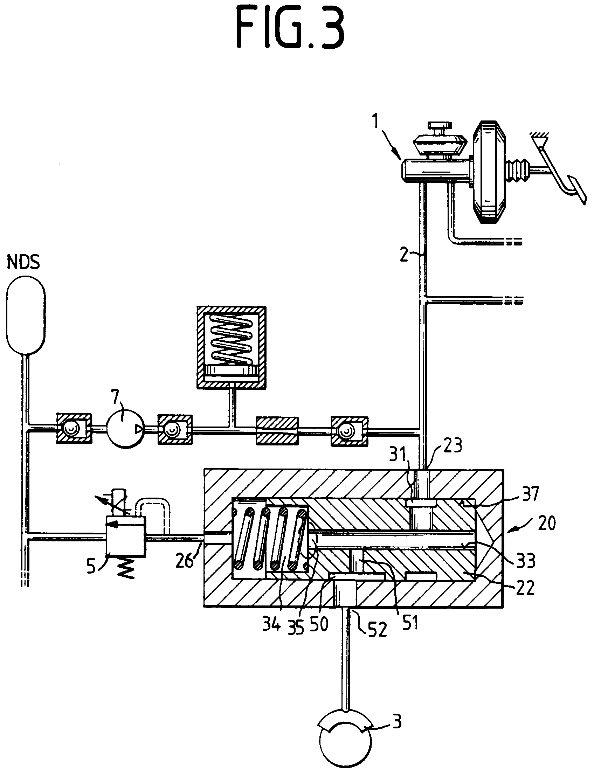

Die Ausführungsform nach Figur 3 zeigt eine etwas andere Form für das Stromregelventil 20. Ansonsten ist der Aufbau der Bremsanlage identisch mit der nach Figur 1, so daß auf eine Erläuterung der Anlage an dieser Stelle verzichtet wird.

Das Stromregelventil 20 nach Figur 1 ist so ausgelegt, daß in der Regelposition des Kolbens 22 die Radbremse 3 unterhalb des Übergangsbereichs 35, also zwischen dem Übergangsbereich 35 und dem vierten Anschluß 26, anschließt. Das Stromregelventil 20 nach Figur 3 ist nun so konstruiert, daß auch dann, wenn der Kolben 22 in die Regelposition fährt, der Anschluß der Radbremse oberhalb des Übergangsbereichs 35 erfolgt. Dazu ist eine Ringnut 50 vorgesehen, die über eine Querbohrung 51 mit dem ersten Bereich 33 der Längsbohrung im Kolben 22 verbunden ist. Die Radbremse 3 steht über einen Radbremsanschluß 52 ständig mit der Ringnut 50 in Verbindung und zwar unabhängig von der Lage des Kolbens 22. Die Einlaßnut 31 hat nun keine unmittelbare Verbindung mehr zur Radbremse, sondern dient mit Hilfe ihrer Steuerkante 37 lediglich dazu, den ersten Anschluß 23 zu drosseln.

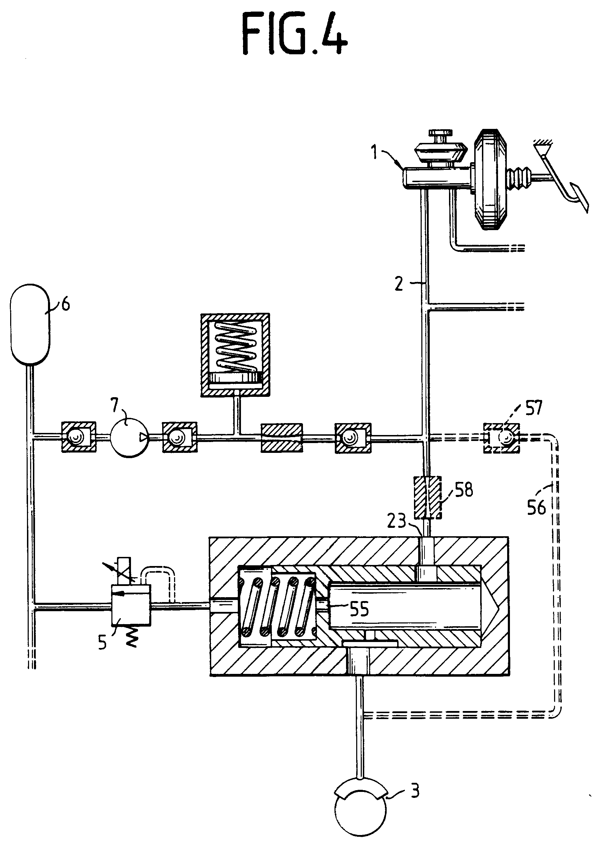

Die Figur 4 entspricht der Figur 3, wobei im Unterschied zu Figur 3 anstelle einer sprungartigen Querschnittserweiterung eine Blende 55 vorgesehen ist. Unter "Blende" sei hier eine abrupte Querschnittsverengung mit sich anschließender abrupter Querschnittserweiterung verstanden, wobei die Länge, auf der die Querschnittsverengung vorliegt, relativ klein ist.

Sowohl an der Blende 55 als auch an der Querschnittserweiterung 35 findet eine Druckänderung in Abhängigkeit von der Strömungsgeschwindigkeit statt. Beide haben die Funktion einer Meßblende für das Stromregelventil 20.

Figur 4 zeigt zusätzlich eine Bypassleitung 56 mit einem Rückschlagventil 57. Hierbei handelt es sich um eine Maßnahme, mit der erreicht werden soll, daß der Druck in der Radbremse 3 auf den Hauptzylinderdruck begrenzt wird. Zusätzlich wird erreicht, daß beim Druckabbau die Drossel 58 nicht wirksam ist. Diese Maßnahme kann bei allen Bremsanlagen, die in dieser Anmeldung vorgestellt werden, eingesetzt werden. In den anderen Figuren wurde der Übersichtlichkeit wegen auf eine besondere Darstellung verzichtet. Das gleiche gilt für eine zusätzliche Drossel 58 am ersten Anschluß 23, um eine Begrenzung des Druckaufbaugradienten bei einer Normalbremsung zu gewährleisten.

Wie schon in der Ausführungsform nach Figur 1 bzw. 3 erläutert, stellt sich während einer Bremsschlupfregelung ein konstanter Druckmittelstrom am Stromregelventil ein. Da nun aber die Radbremse stets oberhalb der Meßblende anschließt, ergeben sich folgende Vorteile. Der über das Druckbegrenzungsventil 5 abfließende Strom setzt sich zusammen aus dem Druckmittelstrom, der vom Hauptzylinder 1 bzw. der Pumpe 7 herrührt, und dem Druckmittelstrom aus der Radbremse 3. Der Druckmittelstrom aus der Radbremse 3 wird somit nicht dem vom Stromregelventil eingestellten Strom überlagert, sondern ist Teil des geregelten Druckmittelstroms. Dadurch muß weniger Druckmittel nachfließen und weniger Druckmittel über das Proportionalventil abfließen. Die vorgesehenen Öffnungsquerschnitte am Proportionalventil können kleiner gewählt werden, und die Leistungsfähigkeit der Pumpe kann verringert werden.

Besondere Vorteile ergeben sich dadurch, daß bei einem schnellen Druckabbau der Kolben 22 so weit nach links geschoben wird, daß der Anschluß 23 vollständig geschlossen wird. Dadurch kann kein Druckmittel nachfließen, so daß der Druck in der Radbremse rasch sinkt. Auf der anderen Seite wird bei einem raschen Druckaufbau der Kolben 22 so weit nach rechts geschoben, daß der Anschluß 23 nicht mehr gedrosselt ist, so daß Druckmittel ungehindert nachfließen kann.

Es stellt sich daher beim Druckaufbau ein erhöhter Druckmittelstrom am ersten Anschluß 23 ein, so daß ein schneller Druckaufbau erfolgen kann.

Mit Hilfe des Proportionaldruckbegrenzungsventils 5 kann nun wiederum jeder beliebige Druck in der Radbremse eingestellt werden.

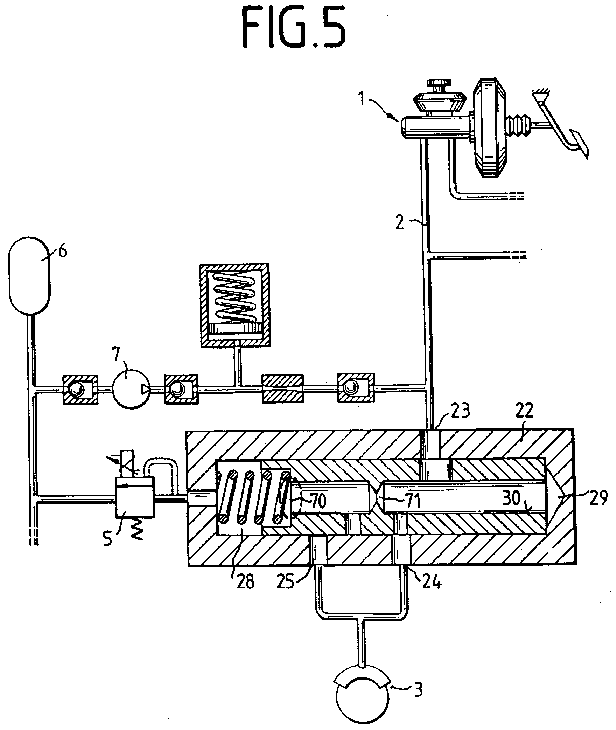

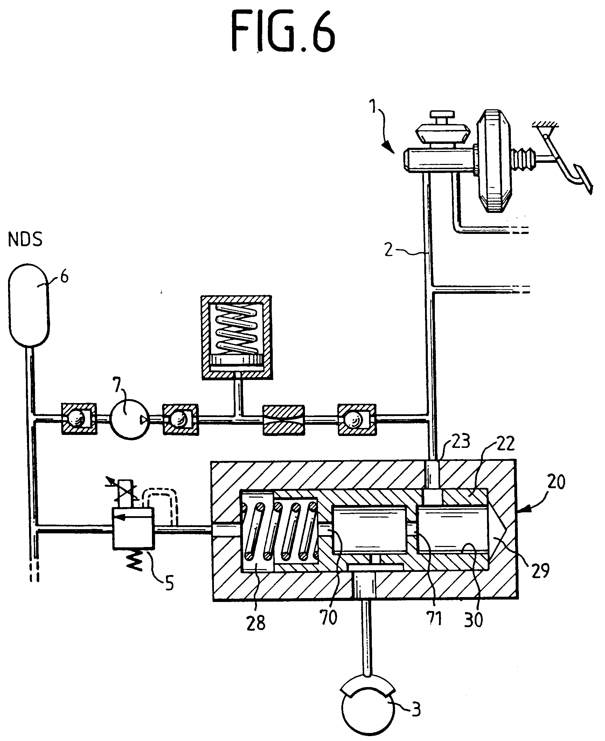

In den Figuren 5 und 6 wird eine weitere Idee berücksichtigt, die im folgenden erläutert werden soll. Der Grundgedanke besteht darin, daß die Meßblende aus zwei Einzelblenden gebildet wird, wobei der Anschluß der Radbremse in der Regelposition des Kolbens 22 zwischen den beiden Blenden liegt.

Der Aufbau der Bremsanlage gemäß den Figuren 5 und 6 entspricht dem Aufbau der Bremsanlage nach Figur 1 bzw. 3, wobei die Bremsanlage gemäß Figur 5 nicht der beanspruchten Erfindung entspricht. Ein Kolben 22 ist in einer Bohrung dichtend geführt und trennt Einlaßkammer 29 und Auslaßkammer 28 voneinander ab. Die Längsbohrung 30 weist zwei Meßblenden auf, nämlich eine erste Blende 70 und eine zweite Blende 71. Gemäß der Ausführung nach der Figur 5 ist die erste Blende als sprungartige Erweiterung, ähnlich der Darstellung der Figur 1, realisiert und die zweite Blende als Querschnittsverengung.

In Figur 6 sind beide Blenden als Querschnittsverengungen dargestellt. Andere Kombinationen sind möglich.

In der Figur 5 weist die Radbremse zwei Anschlüsse 24, 25 auf, wobei in der Grundposition des Kolbens der Anschluß 24 mit dem Bohrungsbereich oberhalb der zweiten Blende verbunden ist und in der Regelposition die Radbremse mit dem Bereich zwischen der ersten und zweiten Blende verbunden wird.

In der Figur 6 ist lediglich ein Anschluß für die Radbremse vorgesehen, die unabhängig von der Position des Kolbens 22 ständig mit dem Bereich der Bohrung 30 zwischen den beiden Blenden verbunden ist.

Das Stromregelventil 20 ist jeweils mit einem ersten Anschluß 23 versehen, an dem sowohl der Hauptzylinder als auch die Pumpe anschließt.

Als Blendenform kann jede Form eingesetzt werden, die in dieser Anmeldung aufgezeigt worden ist. So können zum Beispiel auch zwei sprungartige Erweiterungen vorgesehen werden.

Mit dem Einsatz von zwei Meßblenden ergibt sich die folgende Funktionsweise.

Beim Druckabbau fließt Druckmittel aus der Auslaßkammer 28 ab, das im wesentlichen mit Druckmittel aus der Radbremse ersetzt wird. Ein Nachströmen aus der Einlaßkammer 29 wird durch die zweite Blende 71 verhindert. Dadurch stellt sich ein relativ großes Druckgefälle zwischen den Kammern 28 und 29 ein, wodurch der Kolben 22 verschoben und der erste Anschluß 23 geschlossen wird. In der Druckabbauphase kann also wenig Druckmittel über den ersten Anschluß 23 nachströmen, so daß der Druckabbau relativ rasch erfolgen kann. Über das Druckbegrenzungsventil 5 braucht daher nur die Druckmittelmenge abzufließen, die aus der Radbremse herrührt.

Gerade umgekehrt verhält es sich beim Druckaufbau. Das Druckbegrenzungsventil 5 wird auf einen höheren Druck eingestellt. Dieser wird in der Auslaßkammer 28 wirksam und drängt den Kolben 22 nach rechts, wodurch der erste Anschluß 23 vollständig geöffnet wird. Druckmittel kann nun über die zweite Blende 71 in die Radbremse einströmen. Da die Druckminderung in der Radbremse nicht sofort in der Auslaßkammer 28 wirksam wird, bleibt der Kolben 22 in einer Position, in der der Anschluß 23 geöffnet ist, so daß ein rascher Druckaufbau erfolgen kann. Der Druckaufbaugradient wird lediglich bestimmt durch die Bemessung der zweiten Blende 71.

### Bezugszeichenliste

- 1: Hauptzylinder
- 2: Bremsleitung
- 3: Radbremse
- 4: Rücklaufleitung
- 5: Proportionaldruckbegrenzungsventil
- 6: Niederdruckspeicher
- 7: Pumpe
- 8: Druckleitung
- 9: Dämpfungsspeicher
- 10: Drossel
- 11: Rückschlagventil
- 20: Stromregelventil
- 21: Gehäuse
- 22: Kolben
- 23: erster Anschluß
- 24: zweiter Anschluß
- 25: dritter Anschluß
- 26: vierter Anschluß
- 27: Feder
- 28: Auslaßkammer
- 29: Einlaßkammer
- 30: Längsbohrung
- 31: Einlaßringnut
- 32: Auslaßringnut
- 33: erster Bohrungsabschniit
- 34: zweiter Bohrungsabschnitt
- 35: Übergangsbereich
- 36: Querbohrung
- 37: Steuerkante
- 40: Ventilsitz
- 41: Ventilkörper
- 42: Stößel
- 43: Anker
- 44: Polkern
- 45: Feder
- 46: Spule
- 47: Führungshülse
- 48: Spalt
- 50: Ringnut
- 51: Querbohrung
- 52: Radbremsanschluß
- 55: Blende
- 56: Bypassleitung
- 57: Rückschlagventil
- 58: Drossel
- 70: erste Blende
- 71: zweite Blende

## Patentansprüche

1. Blockiergeschützte hydraulische Bremsanlage mit einem Hauptzylinder (1), mindestens einer Radbremse (3), die über eine Bremsleitung (2) mit dem Hauptzylinder (1) verbunden ist, einem Druckmittelsammler (6), der über eine Rücklaufleitung (4) mit der Radbremse (3) verbunden ist, wobei in die Rücklaufleitung (4) ein Auslaßventil (5) eingefügt ist, einem Stromregelventil bestehend aus einer Drossel mit konstantem Querschnitt, die Meßblende (35,55), einer Drossel veränderlichen Querschnitts, der Differenzdruckregler, wobei das Druckgefälle über der Meßblende (35,55) den Querschnitt des Differenzdruckreglers bestimmt, und einem Kolben (22), der eine Einlaßkammer (29) und eine Auslaßkammer (28) begrenzt, wobei die Kammern über eine Längsbohrung (30) im Kolben miteinander verbunden sind, die Längsbohrung (30) die Meßblende (35,55) aufweist und der Differenzdruckregler zwischen dem Hauptzylinder (1) und der Einlaßkammel (29) angeordnet ist, wobei der Anschluß des Radzylinders (3) über eine Nut (50) an der Mantelfläche des Kolbens (22) und eine Querbohrung (51) hergestellt ist und die Querbohrung (51) in die Längsbohrung (33) des Kolbens zwischen der Einlaßkammer (29) und der Meßblende (35, 55) einmündet, dadurch gekennzeichnet, daß der Radbremsanschluß (52) unabhängig von der Lage des Kolbens (22) ständig mit der Nut (50) in Verbindung steht, wobei die eine Drossel in die Rücklaufleitung (4) und die andere Drossel in die Bremsleitung (2) eingefügt ist.

2. Bremsanlage nach Anspruch 1, dadurch **gekennzeichnet**, daß die Meßblende durch zwei Blenden (70, 71) dargestellt wird, wobei die Radbremse (3) mit dem Kanalabschnitt zwischen den Blenden (70, 71) verbunden ist.

3. Bremsanlage nach Anspruch 1 oder 2, dadurch **gekennzeichnet**, daß als Auslaßventil (5) ein Proportionaldruckbegrenzungsventil vorgesehen ist.

## Claims

1. An anti-lock hydraulic brake system comprising a master cylinder (1), at least one wheel brake (3) connected to the master cylinder (1) by a brake line (2), a pressure-fluid collecting means (6) which communicates with the wheel brake (3) by a return line (4), an outlet valve (5) being inserted into the return line (4), a flow control valve composed of a throttle of constant cross-section, i.e., the metering orifice (35, 55) and a throttle of variable cross-section, i.e. the differential pressure regulator, with the pressure gradient upstream of the metering orifice (35, 55) defining the cross-section of the differential pressure regulator, a piston (22) which bounds an inlet chamber (29) and an outlet chamber (28), both chambers being interconnected through a longitudinal bore (30) in the piston, and the longitudinal bore (30) including the metering orifice (35, 55) and the differential pessure regulator being arranged between the master cylinder (1) and the inlet chamber (29), wherein the connection of the wheel cylinder (3) is established by way of a groove (50) at the peripheral surface of the piston (22) and a transverse bore (51), the transverse bore (51) terminating into the longitudinal bore (33) of the piston between the inlet chamber (29) and the metering orifice (35, 55),
**characterized** in that the wheel brake connection (52) is in permanent connection with the groove (50) independent of the position of the piston (22), and one of the throttles is inserted into the return line (4), while the other throttle is inserted into the brake line (2).

2. Brake system as claimed in claim 1,
**characterized** in that the metering orifice is made up of two restrictors (70, 71), and the wheel brake (3) is connected to the channel portion between the restrictors (70, 71).

3. Brake system as claimed in claim 1 or claim 2,
**characterized** in that a proportional pressure limiting valve is provided as outlet valve (5).

## Revendications

1. Système de freinage hydraulique antiblocage, comprenant un maître-cylindre (1), au moins un frein de roue (3), qui est relié au maître-cylindre (1) par l'intermédiaire d'une conduite de frein (2), un accumulateur d'agent de pression (6), qui est relié au frein de roue (3) par l'intermédiaire d'une conduit de retour (4), une valve de sortie (5) étant insérée dans la conduite de retour (4), une valve de régulation de débit, formée d'un orifice calibré à section transversale constante, les moyens d'étranglement de mesure (35, 55), d'un orifice calibré à section transversale variable, le régulateur de pression différentielle, la perte de charge à travers les moyens d'étranglement de mesure (35, 55) déterminant la section transversale du régulateur de pression différentielle, et d'un piston (22) qui délimite une chambre d'entrée (29) et une chambre de sortie (28), tandis que les chambres sont reliées l'une à l'autre par l'intermédiaire d'un alésage longitudinal (30) ménagé dans le piston, que l'alésage longitudinal (30) comporte les moyens d'étranglement de mesure (35, 55) et que le régulateur de pression différentielle est disposé entre le maître-cylindre (1) et la chambre d'entrée (29), le raccordement du cylindre de roue (3) étant réalisé par l'intermédiaire d'une gorge (50), ménagée sur la surface périphérique du piston (22), et d'un perçage transversal (51), lequel perçage transversal (51) débouche dans l'alésage longitudinal (33) du piston entre la chambre d'entrée (29) et les moyens d'étranglement de mesure (35,55), caractérisé en ce que, d'une manière indépendante de la position du piston (22), le raccord de frein de roue (52) communique en permanence avec la gorge (50), tandis qu'un premier orifice calibré est inséré dans la conduite de retour (4) et l'autre orifice calibré est inséré dans la conduite de frein (2).

2. Système de freinage selon la revendication 1, caractérisé en ce que les moyens d'étranglement de mesure sont constitués de deux orifices d'étranglement (70, 71), le frein de roue (3) communiquant avec la section de conduit située entre les orifices d'étranglement (70, 71).

3. Système de freinage selon la revendication 1 ou 2, caractérisé en ce qu'en tant que valve de sortie (5), il est prévu une valve de limitation de pression de type proportionnel.
